# EUROPEAN PATENT APPLICATION

(11) **EP 4 686 040 A1**
(43) Date of publication of application: **28.01.2026**
(21) Application number: 24190579.3
(22) Date of filing: 24.07.2024
(51) Int. Cl.: H02J 50/12, H02J 50/80

(54) **WIRELESS POWER TRANSFER**

(71) Applicant: Koninklijke Philips N.V., 5656 AG Eindhoven (NL)
(72) Inventor: DRAAK, Johannes Wilhelmus, 5656 AG Eindhoven (NL); LEBENS, Pascal Leonard Maria Theodoor, 5656 AG Eindhoven (NL); LULOFS, Klaas Jakob, 5656 AG Eindhoven (NL)
(74) Representative: Philips Intellectual Property & Standards

(57) **Abstract**

A wireless power transmitter (101) provides power to a power receiver (105) via an electromagnetic power transfer signal generated from a power transfer coil (103) in response to a drive signal generated by a driver (201). A communication circuit (207) receives power setpoint values from the power receiver (105) and a power controller (211) controls a power level parameter of the drive signal in dependence on the power setpoint values. An open loop control (703) generates open loop control values and a closed loop control circuit (701) generate closed loop control values from the power setpoint values. A first circuit (705) combines these to generate output control values which by a second circuit (707) is used to set the power level parameter. An adapter (709) adapts the relative weights of the combination in dependence on a power transfer level for a power transfer to the power receiver.

## Description

### FIELD OF THE INVENTION

The invention relates to wireless power transfer and in particular, but not exclusively, to wireless power transfer systems operating in accordance with elements of the Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Wireless Power Consortium has proceeded to develop the Ki Specification (also known as the Cordless Kitchen Specification) which is aimed at providing safe, reliable, and efficient wireless power transfer to high power devices such as kitchen appliances. Ki supports much higher power levels than Qi, and indeed power levels up to 2.5KW are supported.

A critical characteristic of wireless power transfer systems is the accurate control of the power level of the power transfer to the power receiver. In many systems, such as Qi and Ki wireless power transfer systems, a power control loop is implemented based on the power receiver measuring received power and requesting appropriate power levels or changes therein from the power transmitter. However, current approaches for controlling the power levels tend not to be ideal in all scenarios and circumstances. In particular, providing control functions that provide high performance across a large dynamic range of the provided power is very difficult and current approaches tend to not ideally cover the entire range. For example, accurately measuring power levels and controlling the power transfer level dependent thereon is often not achievable to the desired extent.

Hence, an improved wireless power transfer approach would be advantageous, and in particular, an approach allowing increased flexibility, reduced cost, reduced complexity, improved power transfer operation, increased reliability, increased efficiency, reduced losses, improved power control, improved control of the power transfer level, improved support for large dynamic ranges of the power levels, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a wireless power transmitter for wirelessly providing power to a power receiver via an electromagnetic power transfer signal, the power transmitter comprising: a power transfer coil arranged to generate the electromagnetic power transfer signal in response to a drive signal being provided to the power transfer coil; a driver arranged to generate the drive signal for the power transfer coil to generate the electromagnetic power transfer signal; a communication circuit arranged to receive power setpoint values from the power receiver, the power setpoint values being indicative of a target power level for the electromagnetic power level power transfer signal; and a power controller arranged to control a power level parameter of the drive signal in dependence on the power setpoint values, the power controller comprising: an open loop control circuit arranged to generate open loop control values from the power setpoint values; a closed loop control circuit arranged to generate closed loop control values from the power setpoint values; a first circuit arranged to generate output control values from the open loop control values and the closed loop control values; a second circuit arranged to set the power level parameter dependent on the output control values; and an adapter arranged to adapt a relative weight of the open loop control values relative to the closed loop control values when generating the output control values, the adapter being arranged to adapt the relative weight in dependence on a power transfer level for a power transfer to the power receiver.

The invention may allow improved performance and/or facilitated operation in many wireless power transfer systems. It may allow improved power transfer in many embodiments. In many embodiments, the approach may provide improved power control for the power transfer signal. The approach may in particular typically allow improved power control across a large range of power levels. The approach may provide improved adaptation to specific requirements for low power applications/receivers (such as quick adaptation e.g. allowing adaptation to a start up charging of a power capacitor) as well as for high power applications (such as accurate adaptation to reduce the risk of over-voltage or stressing of components). The approach may provide improved trade-off between different preferences for high power scenarios and low power scenarios. The approach may often facilitate and/or allow improved measurements of power levels. The dynamic range that needs to be supported for such measurements may be reduced thereby allowing more accurate and/or facilitated implementation of suitable measurement functions.

The power level parameter may be any (controllable) property or characteristic of the drive signal that may impact a power level of the drive signal and/or the power transfer signal. The power level parameter may specifically be a frequency, duty cycle, burst mode percentage, or amplitude (current and/or voltage) of the drive signal.

The first circuit may be a combination circuit arranged to generate output control values by combining the open loop control values and the closed loop control values (including selection combining where the output control values are selected as the open loop control values or the closed loop control values).

The open loop control values may also be referred to as first control values. The closed loop control values could be referred to as second control values.

The open loop circuit may be arranged to generate the power level parameter as a function of the power setpoint values.

The closed loop control circuit may receive the setpoint values as reference values for a closed control loop seeking to control/controlling the power parameter to minimize a difference between a measure value of a power of the power transfer signal and/or drive signal and a power level indicated by the setpoint values.

In accordance with an optional feature of the invention, the adapter is arranged to control the power controller to increase a weighting of the open loop control values relative to the closed loop control values for a decreasing power transfer level.

This may provide improved power transfer in many scenarios and may in particular allow improved power control, and especially over a large range of power values.

In accordance with an optional feature of the invention, the adapter is arranged to control the power controller to ignore the closed loop control values in determining the output control values when the power transfer level does not exceed a first threshold.

This may provide improved power transfer in many scenarios and may in particular allow improved power control, and especially over a large range of power values.

The power transmitter may be arranged to determine the output control values in dependence on the closed loop control values when the power transfer level exceeds the first threshold.

The first threshold may be in the range of 20W-100W.

In accordance with an optional feature of the invention, the adapter is arranged to control the power controller to ignore the open loop control values in determining the output control values when the power transfer level exceeds a second threshold.

This may provide improved power transfer in many scenarios and may in particular allow improved power control, and especially over a large range of power values.

The power transmitter may be arranged to determine the output control values in dependence on the open loop control values when the power transfer level does not exceed the second threshold.

The second threshold may be in the range of 20W-100W. The second threshold is typically not smaller than the first threshold. The second threshold may be the same as first threshold in some embodiments.

In accordance with an optional feature of the invention, the adapter is arranged to control the power controller to determine the output control values as a weighted combination of the open loop control values and the closed loop control values.

This may provide particularly advantageous operation in many embodiments and scenarios.

In accordance with an optional feature of the invention, the adapter is arranged to control the power controller to determine the power transfer power level from the power setpoint values.

This may provide particularly advantageous operation in many embodiments and scenarios.

In accordance with an optional feature of the invention, the open loop control circuit is arranged to calculate the open loop control values as a deterministic function of the power setpoint values.

This may provide particularly advantageous operation in many embodiments and scenarios.

In many embodiments, the deterministic function may include a consideration of a number of other parameters and/or may be dependent on other parameters. In particular, the deterministic function may determine the open loop control values in dependence on system parameters or operating parameters, such as properties of the power transmitter or indeed of the power receiver.

In accordance with an optional feature of the invention, a time constant for the closed loop control circuit determining closed loop control values exceeds that of a time constant for the open loop control circuit determining open loop control values by at least a factor of five.

This may provide particularly advantageous operation in many embodiments and scenarios.

In many embodiments, the closed loop may have a time constant not less than 10 msec. In many embodiments, the open loop may have a time constant not more than 1 msec.

In accordance with an optional feature of the invention, the communication circuit is arranged to transmit a capability message to the power receiver, the capability message indicating a property of the power controller.

This may provide particularly advantageous operation in many embodiments and scenarios.

In accordance with an optional feature of the invention, the communication circuit is arranged to receive a capability message from the power receiver, the capability message being indicative of a power control property of the power receiver; and the adapter is arranged to adapt the generation of the open loop control values in dependence on the capability message.

This may provide particularly advantageous operation in many embodiments and scenarios.

In accordance with another aspect of the invention, there is provided a power receiver for wirelessly receiving power from a power transmitter via an inductive power transfer signal, the power receiver comprising: an input circuit comprising a receiver coil arranged to extract power from the power transfer signal; a power path coupling the input circuit to a load to provide power extracted from the power transfer signal to the load; a power control circuit arranged to measure a load power level and to determine power setpoint values in dependence on a comparison of the load power level to a target load power level; a communicator arranged to communicate data with the power transmitter, the communicator being arranged to transmit the power setpoint values to the power transmitter; and an adapter arranged to adapt a dynamic property of determining the power setpoint values in dependence on a power transfer level for a power transfer to the power receiver.

The dynamic property may specifically be a timing property, such as a time constant, for the determination of the power setpoint values from/in dependence on the load power level.

In accordance with an optional feature of the invention, the adapter is arranged to adapt a frequency of transmission of power setpoint values to the power transmitter.

There may be provided a wireless power transfer system comprising a power transmitter as described above and a power receiver as described above.

In accordance with another aspect of the invention, there is provided a method of operation for a wireless power transmitter wirelessly providing power to a power receiver via an electromagnetic power transfer signal, the power transmitter comprising: a power transfer coil arranged to generate the electromagnetic power transfer signal in response to a drive signal being provided to the power transfer coil; and the method comprising: generating the drive signal for the power transfer coil to generate the electromagnetic power transfer signal; receiving power setpoint values from the power receiver, the power setpoint values being indicative of a target power level for the electromagnetic power level power transfer signal; and controlling a power level parameter of the drive signal in dependence on the power setpoint values, the controlling comprising: an open loop control circuit generating open loop control values from the power setpoint values; a closed loop control circuit generating closed loop control values from the power setpoint values; generating output control values from the open loop control values and the closed loop control values; setting the power level parameter dependent on the output control values; adapting a relative weight of the open loop control values relative to the closed loop control values when generating the output control values in dependence on a power transfer level for a power transfer to the power receiver.

In accordance with another aspect of the invention, there is provided a method of operation for a power receiver wirelessly receiving power from a power transmitter via an inductive power transfer signal, the power receiver comprising: an input circuit comprising a receiver coil arranged to extract power from the power transfer signal; a power path coupling the input circuit to a load to provide power extracted from the power transfer signal to the load; and the method comprising: measuring a load power level and determining power setpoint values in dependence on a comparison of the load power level to a target load power level; communicating data with the power transmitter including transmitting the power setpoint values to the power transmitter; and adapting a dynamic property of determining the power setpoint values in dependence on a power transfer level for a power transfer to the power receiver.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of a power transfer signal for a wireless power transfer system in accordance with some embodiments of the invention;
FIG. 7 illustrates an example of elements of a power transmitter in accordance with some embodiments of the invention; and
FIG. 8 illustrates an example of elements of closed loop power control function for a power transmitter in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Qi or Ki Specifications. However, it will be appreciated that the invention is not limited to this application but may be applied to many other wireless power transfer systems.

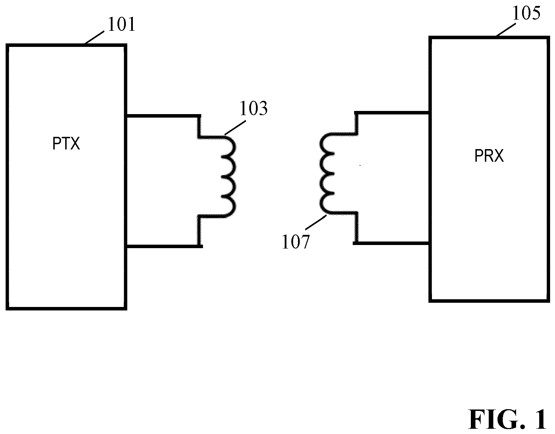

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 20-75 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured, and a desired power level can be determined. The power receiver may calculate and send a new setpoint value to the power transmitter which may in response change the power level of the power transfer signal. Accordingly, the combination of the power receiver and power transmitter may form a power control loop that adapts operation to provide the load of the power receiver with the appropriate power level.

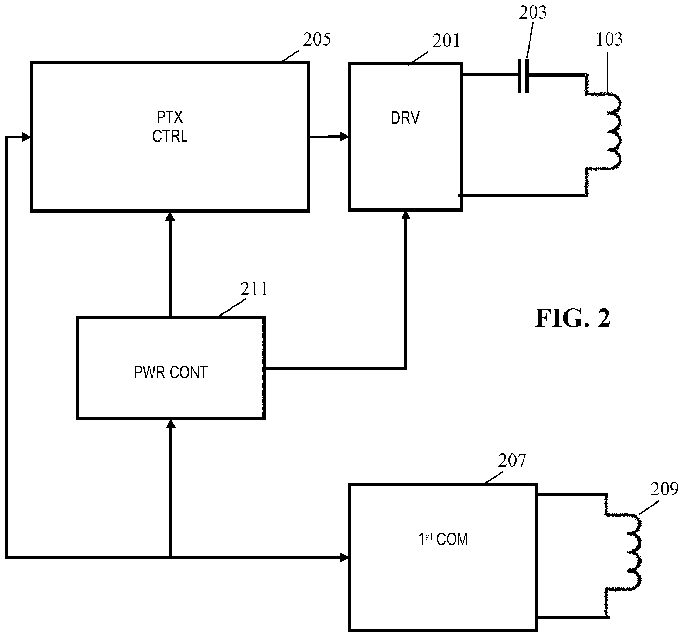

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

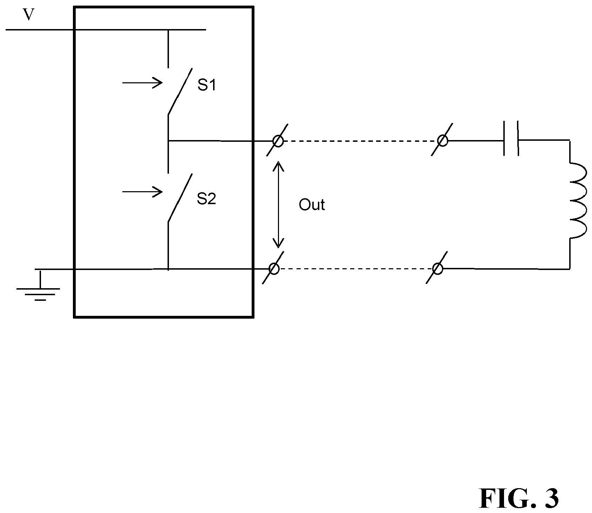

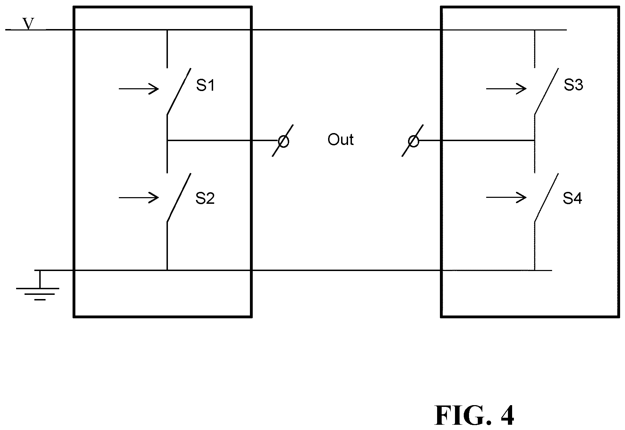

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

In the example of the power transmitter of FIG. 2, the power transmitter 101 comprises a power transmitter communicator 207 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 209. The power transmitter communicator 207 is coupled to the first communication coil 209 and is arranged to generate a communication drive signal which is fed to the first communication coil 209 to generate the communication carrier. The power transmitter communicator 207 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz.

The power transmitter communicator 207 may be arranged to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 209 in accordance with the data to be transmitted. The power transmitter communicator 207 is specifically arranged to sense variations in the voltage and/or current of the communication coil 207 and to demodulate the load modulation based on these. In typical embodiments, the power transmitter communicator 207 may for example receive data from the power receiver and forward it to the power transmitter controller 205 for controlling the power transfer signal etc.

In some embodiments, the communication may be in accordance with the Near Field Communication, NFC, Specifications and the power receiver may specifically include NFC functionality. In these embodiments, the power transmitter communicator 207 and the first communication coil 209 may implement (at least) the functionality of an NFC reader. Thus, in some embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

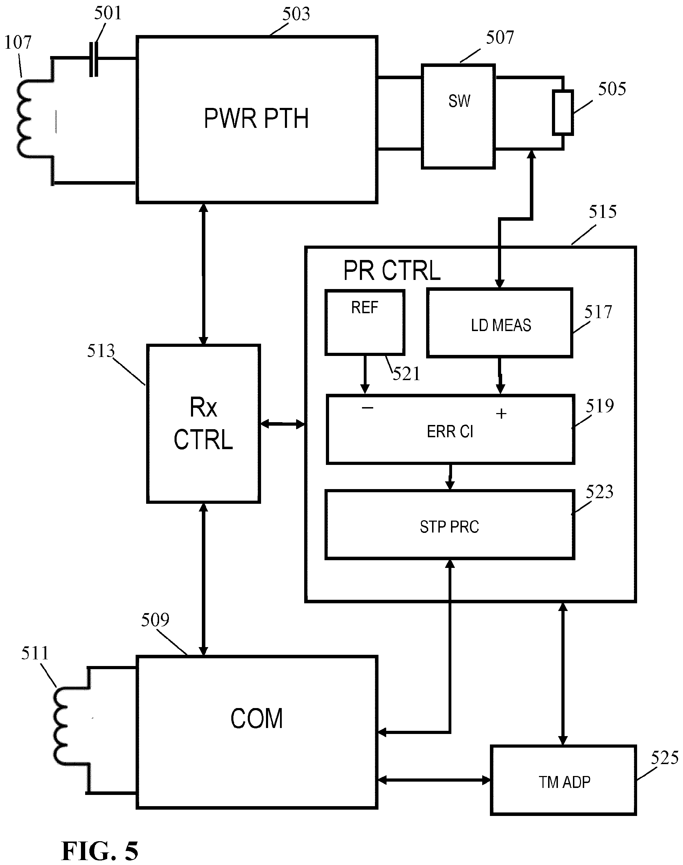

FIG. 5 illustrates some exemplary elements of the power receiver 105.

The power receiver 105 comprises an input circuit 107, 501 which is arranged to extract power from the power transfer signal to generate an induced power signal. The input circuit includes a receiver coil 107 arranged to extract power from the power transfer signal by induction, i.e. the magnetic field of the power transfer signal induces a signal in the receiver coil. In the example, the receiver coil 107 is coupled to a capacitor 501 which together with the receiver coil 107 forms an input resonance circuit. Thus, the input circuit may be a resonance circuit and the power transfer may be a resonant power transfer between resonance circuits. In other embodiments, only one, or none, of the power receiver and the power transmitter may utilize a resonance circuit for power transfer.

The input circuit is coupled to a power path 503 which comprises an input that is coupled to the input circuit 107, 501 and which receives the induced power signal. The induced power signal is an AC signal (corresponding to the electromagnetic power transfer signal).

The power path 503 couples the receiver coil 107 to a load 505 via a switch 507. The power path 503 includes a power control path which converts the power extracted by the receiver coil 107 into a suitable supply for the load 505.

The load 505 represents the target load for the power transfer. The load 505 may for example be an external device, a battery or charging function, etc. The load 505 may also represent the loading by internal circuitry, such as control, support, and auxiliary circuits supporting the power transfer.

It will be appreciated that although FIG. 5 illustrates the switch 507 as directly switching in or out the load itself, switching may be performed at other positions in the power path, such as at the input to the power path, before or after rectification, etc. It will also be appreciated that in many embodiments the power path may not include any switching whatsoever and that the load may be constantly coupled to the power path (and e.g. requiring constantly provision of power).

In some embodiments, the power path 503 may provide a direct power path connecting the input resonance circuit to the switch 507 or load 505. In some power receivers, the power path may simply be a direct connection formed by two wires. However, in other power receivers, the power path may include an energy storage which typically may store energy over relatively short time periods. In many power receivers, the power path may include a rectifier. Such a rectifier may convert an induced AC signal to a (typically varying) DC signal. Such a rectifier may e.g. by a bridge or a single rectifier providing a half-wave rectified or full-wave rectified. In some power receivers, the power path may in addition to the rectifier include an energy storage such as specifically one or more smoothing capacitors which provide a more smoothed (less variation) DC signal. In other power receivers, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

Thus, the power path 503 may be substantially different for different power receivers. However, for a very large number of power receivers, the power path comprises a rectifier (bridge) and a smoothing capacitor which is arranged to smooth the rectified power signal resulting in the power receiver 105 providing a smoothed DC voltage to the load.

The power receiver 105 comprises a power receiver communicator 509 and a power receiver communication coil 511. The power receiver communication coil 511 is arranged to couple to the power transmitter communication coil 209 and thus the communication carrier signal induces a current (at least an emf) in the power receiver communication coil 511.

The power receiver communicator 509 is coupled to the power receiver communication coil 511 and is arranged to determine amplitude variations in the induced signal and to demodulate amplitude modulations of the communication carrier signal. Thus, the power receiver communicator 509 is arranged to decode data transmitted from the power transmitter by amplitude modulation of the communication carrier signal. It will be appreciated that in other embodiments, the power receiver communicator 509 may be arranged to decode data modulated onto the communication carrier signal using other modulation formats such as frequency or phase modulation.

The power receiver communicator 509 is further arranged to load modulate the communication carrier signal in order to transmit data from the power receiver to the power transmitter. Specifically, the power receiver communicator 509 may comprise a load (such as a capacitor) which depending on the data to transmit can be switched between being coupled to the power receiver communication coil 511 and not being coupled to the power receiver communication coil 511. These load modulations may then be detected by the first communicator 207 of the power transmitter.

In the specific example, the power receiver communication coil 511 and the power receiver communicator 509 may provide NFC compatible communication operation. Specifically, the power receiver communication coil 511 may be arranged to provide functionality corresponding to an NFC tag and to decode data that has been ASK modulated onto the communication carrier signal in accordance with the NFC specifications.

Thus, the power receiver communicator 509 is arranged to transmit data to the power transmitter by varying the loading of the power receiver communication coil 511 in response to data to be transmitted to the power transmitter 101. The load variations are then detected and demodulated by the power transmitter 101 as will be known to the person skilled in the art.

In the example, the power receiver communicator 509 is furthermore arranged to demodulate amplitude, frequency, and/or phase modulation of the communication carrier signal in order to retrieve data transmitted from the power transmitter.

The power receiver further comprises a power receiver controller 513 which performs various power receiver controller functionality required to perform power transfer, and in particular functions required to perform power transfer in accordance with the Ki Specifications.

In operation, the system is arranged to control the drive signal such that the power transfer signal attains suitable operating parameters/ properties and such that the power transfer operates at a suitable operating point. In particular, the system may implement a control loop where the power receiver measures the received power level/the power level provided to the load 505 and continuously determines whether this is at an appropriate level. In particular, the measured load may be compared to a desired/target power level and a power control message requesting a change in the power level or a different power setpoint level may be transmitted to the power transmitter. The power transmitter may then adapt the power level of the drive signal/power transfer signal in accordance with received power indication.

The power transmitter is accordingly arranged to control a parameter of the drive signal using a power control loop where a power property of the power transfer signal/ drive signal is controlled in response to power control messages that are received from the power receiver. A power control loop is employed that controls a power property of the power transfer signal to result in the desired operating point at the power receiver.

Such power control loops are used in many wireless power transfer systems. In many such systems, and in particular in Ki systems, a given power transmitter may be required to operate with many different power receivers having many different properties including having vastly different power requirements.

Indeed, a wide range of power transmitters and power receivers may exist and be required to interwork. For example, the coil sizes, induction values and loads can vary substantially. Indeed, most of the power transfer operating parameters may vary depending on the specific device characteristics and mechanical constructions. In addition, placement of the power transmitter changes the coupling between the inductors.

Furthermore, the devices can have several modes in which they operate, for example, several loads can be switched on or off, such as in an airfryer appliance where the heating element can be turned on and off. This can result in a load step from 50 to 1200W and this can be repeated during operation of the device to keep the temperature constant.

Systems can also contain non-linear loads. For example, instead of a resistive component, the load may include a motor (such as e.g. in a food processor). This results in a completely different response of the system and has a large impact on the control system design. Normally the system uses a control loop to ensure that the right operating point is reached. Such a control loop can control the amount of power that is transmitted to the power receiver.

In order to effectively set the drive signal to match the setpoint received from the power receiver, power transmitters may include an inner feedback loop being a loop that receives the setpoint signal as a reference signal and which uses a feedback loop to control the drive signal so that a measured power level of the drive signal/power transfer signal matches the reference. Such an approach may provide improved power control and allow the power transmitter to more accurately control the drive signal to provide the desire power.

However, implementing an inner power control loop in the power transmitter may also have a number of disadvantages and issues.

For example, it is often very difficult to accurately operate at both low and high power levels. It is often difficult and expensive to design a power measurement system that can cover the entire dynamic power range. E.g. it is difficult to design a system capable of accurately measuring power at 2.5kW and also at 1W. Also, a 1W measurement approach is unlikely to also be capable of being operated at a 2500W level.

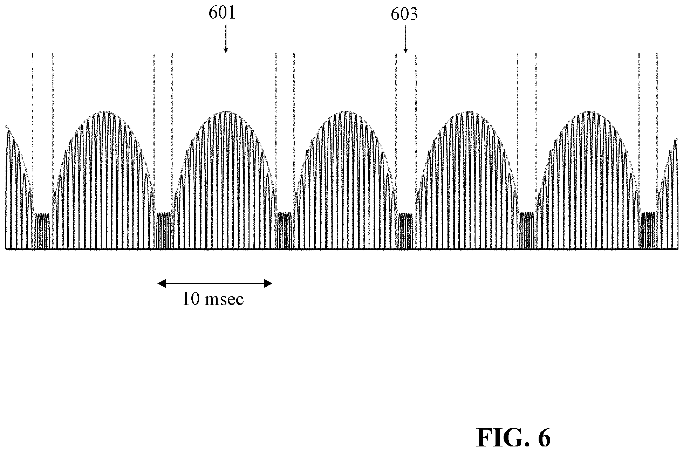

Further, power control operation tends to be slow in conventional approaches. For example, FIG. 6 illustrates an example of a power transfer signal which is divided into power slots 601 during which power is transferred to the power receiver, and communication slots 603 during which communication may be performed. The communication slots alternate between slots that are used for communication from the power transmitter to the power receiver and slots that are used for communication from the power receiver to the power transmitter. The time slots are typically synchronized to the mains power (typically 50Hz or 60Hz). Thus, the frequency of setpoint transmissions to the power transmitter from the power receiver are often limited to an update rate of 50Hz-60Hz. This puts a substantial restriction on the dynamics of the loops.

In Ki systems, the power level is not dynamically controlled during each power transfer slot, and typically the power transmitter will require around 5-6 power slots to stabilize the power level resulting in a settling time of around 60ms or so for the inner power control loop. In order to ensure stability and reliable control operation, the outer control loop needs to be substantially slower than the inner control loop, and typically, the outer loop needs to have a risetime/ settling time/time constant that is at least five times higher than the inner loop. Thus, typically the outer loop is required to have low bandwidth/high rise/settling times/ high time constants. Typically, the outer loop will have a risetime/time constant larger than 300ms.

The two-loop structure may reduce the error that the outer loop seeks to regulate. It may also be advantageous in that both the transmitter and receiver side have some control of the power of the power transfer signal which may for example helps in ensuring that no overstressing of components occurs due to extreme operating values, which especially may be an issue at very high power levels.

However, the slow operation of such loop structures may have disadvantageous effects. For example, some power receivers have large buffer capacitors in comparison to the actual load. Such capacitors are included to stabilize the output voltage but need a large burst of energy at power start up to be sufficiently charged. However, this causes problems with a slow loop as upon the capacitor being charged, a relatively quick and large change in the power being transferred to the power receiver is required to prevent over-voltages occurring. For such scenarios, regulations with time constants/risetimes around 300ms or so tend to be far too slow to ensure correct startup.

The power transmitter and power receiver approaches of FIGs. 1-6 may provide improved performance in many systems, applications and scenarios, and may in particular often mitigate or address the issues described above.

The systems use an approach where the power control is adapted and with different approaches being used for different operation points.

The power receiver of FIG. 5 comprises a power receiver power control circuit 515 which generates power setpoint values that are then fed to the power receiver communicator 509 for transmission to the power transmitter.

The power receiver power control circuit 515 measures a load power level being a power level indicative of the power that is provided to the load/extracted from the power transfer signal. In the example of FIG. 5, the power receiver power control circuit 515 includes a load measure circuit 517 which measures the load level. It will be appreciated that many different approaches are known for measuring/determining a power level. For example, in many embodiments, a load voltage and/or current may be measured and directly used as a measure of the power provided to the load (e.g. if the other parameter is constant). In other cases, the load power level may be determined by multiplying the measured current and voltage. Typically, the measurement process may include a suitable low pass filtering/averaging effect.

The load measure circuit 517 is coupled to an error circuit 519 which determines the difference between the measured load power level and a reference load power level received from a store 521 or e.g. from the power receiver controller 513. The reference load power level is a desired power level for the power transfer operation and will depend on the specific application, including the specific operating mode currently supported.

The error circuit 519 generates an error signal indicative of the difference between the current measured load power level and the reference load power level. The error circuit 519 is coupled to a setpoint circuit 523 which generates a power setpoint value which is indicate of a desired/target power level for the power transfer signal. In many cases, the setpoint circuit 523 generates the setpoint value to indicate an absolute value for the target power level but it will be appreciated that in some embodiments, the setpoint value may be generated to provide a relative indication of the target power level, such as for example by indicating a desired change/difference to a current level. In many cases, the setpoint processor may include an integration function and may specifically update an existing setpoint value by a relative amount depending on the error value received from the error circuit 519.

It will be appreciated that different approaches are known for calculating a power setpoint value from measured load power levels (and typically reference values) and that the above example is merely one possibility for the power receiver determining suitable power setpoint values.

The setpoint value is fed to the power receiver communicator 509 which transmits it to the power transmitter. In many embodiments, the power receiver communicator 509 may transmit a new power setpoint message in each communication slot for transmission from the power receiver to the power transmitter, and thus in many cases around every 10-20 msec.

The power setpoint values are received by the power transmitter communicator 207. The power transmitter comprises a power transmitter power controller circuit 211 which is fed the received power setpoint values and which is arranged to control a power level parameter of the drive signal in dependence on the power setpoint values. The power level parameter may be any parameter that affects the power level of the power transfer signal and the power transfer, and specifically may be a frequency, duty cycle, burst mode percentage, amplitude (current and/or voltage), phase modulation of the drive signal.

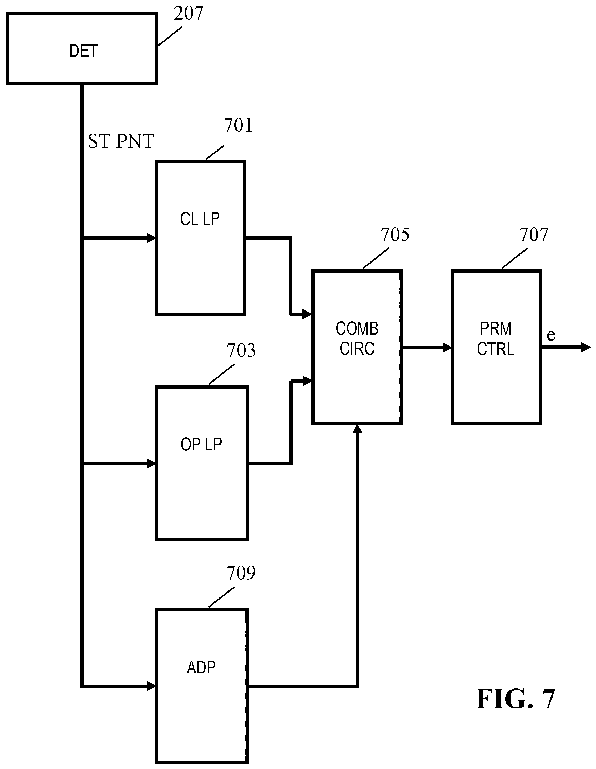

FIG. 7 illustrates an example of elements of the power transmitter power controller circuit 211.

The power transmitter power controller circuit 211 comprises a closed loop control circuit 701 which is arranged to generate control values, henceforth referred to as closed loop control values, from the power setpoint values based on a feedback loop. The closed loop control circuit 701 implements a control loop where a change to the power parameter of the drive signal is determined from a measurement of a parameter that indicates the power level of the drive signal. Typically, the power level of the drive signal itself is measured and compared to the reference/target level indicated by the received setpoint messages and closed loop control values are generated to bias the power parameter to reduce the difference between the measured power level and the reference/target power levels as determined from the power setpoint values. The closed loop control circuit 701 may use conventional closed loop control principles, approaches, and circuits to implement a feedback control loop (except for differences as herein described).

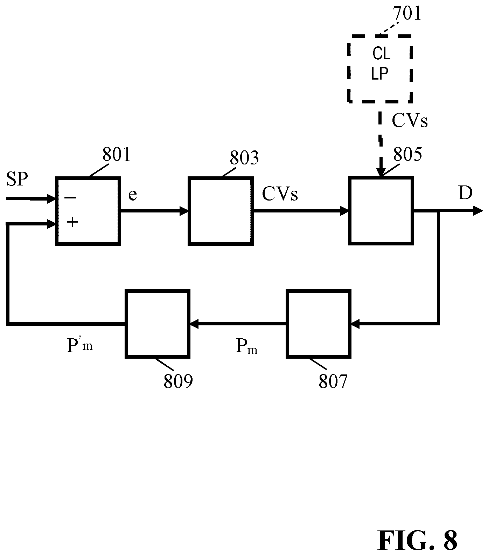

An example of a closed loop of the closed loop control circuit 701 is illustrated in FIG. 8. In the example, an error circuit 801 receives a power setpoint value which is a reference value for the loop, and specifically provides the reference power level that the loop seeks to set the power level of the drive signal to. The error circuit 801 generates an error value/signal that indicates the difference between a measured power level of the drive signal and the reference level of the power setpoint value. The error signal is fed to a control value circuit 803 which proceeds to generate closed loop control values that are used to control the drive signal. For example, the control value circuit 803 may increase values of the currently generated closed loop control values in response to a positive error signal, and may decrease values of the currently generated closed loop control values in response to a negative error signal.

The closed loop control values are fed to a control circuit 805 which generates the drive signal based on the closed loop control values. The control circuit may include the combination with the open loop control values to generate the output control values, as well as the driver 211 generating the drive signal and the control function associated therewith. Thus, the control circuit 805 represents all the functionality included in generating the drive signal from the closed loop control values (as well as potentially other values, such as the open loop control values).

The loop further comprises a measurement function 807 which measures the current level of the drive signal. The measured power level is filtered in a loop filter 809 before being fed to the error circuit 801 for comparison to the power setpoint values.

The power transmitter power controller circuit 211 further comprises an open loop control circuit 703 which is arranged to generate control values, henceforth referred to as open loop control values, from the power setpoint values. The open loop control circuit 703 is a non-feedback controller in which the control values are determined independently of the current power parameter value and/or the measured (current/instantaneous) power level of the drive signal/power transfer signal. The open loop control circuit 703 does not utilize a feedback to determine the control values or implement a feedback loop. The open loop control values are determined from the setpoint values without feedback values being considered.

In many embodiments, the open loop control values may be determined as a direct, and specifically a deterministic, function of the received setpoint values.

In particular, the open loop control circuit 703 may include a specific formula or function that provides a control value as a function of a setpoint value, and the open loop control circuit 703 may evaluate this function for each received setpoint value to determine the corresponding open loop control value. The deterministic function may be provided as a mathematical function or may e.g. be stored in as a Look-Up-Table.

In many embodiments, the deterministic function (whether expressed as a Look-Up-Table or a mathematical formula) may be predetermined during a manufacturing and/or design phase based on manual measurements and testing. As will be described in more detail later, the function/relationship between power setpoint values and open loop control values may be adapted to the specific power receiver and may e.g. be calibrated for the individual power receiver.

The closed loop control circuit 701 and the open loop control circuit 703 are coupled to a first circuit, in the following referred to as a combination circuit 705, which is arranged to generate output control values from the open loop control values and the closed loop control values. The combination circuit 705 may proceed to generate the output control values by combining the closed loop control values and the open loop control values.

In some embodiments and/or for some scenarios, the combination may include a selection combining where the output control values are generated by selecting between open loop control values and closed loop control values. Thus, in some embodiments, the output control values may be generated as open loop control values or as closed loop control values with the combination circuit 705 being arranged to select between one or the other dependent on a suitable selection criterion. Such a binary case may be considered to correspond to a selection between the control loop using an open loop/non-feedback approach for the setting of the power parameter of the drive signal from the received power setpoints and using a closed loop/feedback approach for the setting of the power parameter of the drive signal from the received power setpoints. Thus, such an example can be considered to correspond to a selection between the power control function comprising only the outer loop involving the power receiver (and with no full loop being implemented in the power transmitter itself) and the power control function comprising a multi-loop structure with an inner loop being formed/implemented in/by the power transmitter.

In other embodiments, the combination circuit 705 may be arranged to generate the output control values as a weighted combination (particularly summation) of the open loop control values and the closed loop control values. For example, a simple weighted linear summation of open loop control values and closed loop control values may be applied with the weights being adaptable. In the extreme case of using binary weight values (1 or 0), such an approach may correspond to the selection combining mentioned in the previous paragraph.

In many cases, the open loop control values, closed loop control values, and output control values may all be corresponding values of the same parameter and may specifically be values of the controlled power level parameter of the drive signal. For example, all the values may be relative or absolute values for a duty cycle, a drive signal frequency, a burst-mode property, etc. However, it will be appreciated that in some embodiments, the combination circuit 705 may include a processing, modification, or conversion of control values, e.g. to make the input control values compatible with each other and/or the required format and representation of the output values.

It will also be appreciated that in some embodiments, more complex algorithms and approaches may be used for combining the open loop control values and closed loop control values, included applying non-linear weights, or functions, to the control values as part of the combination. It will also be appreciated that the combination in some cases may consider other parameters or values in determining the output control values.

The dynamic performance of the open loop control circuit 703 and the closed loop control circuit 701 is typically substantially different. A closed loop control is typically relatively slow as it needs time for the loop to adapt to error signals while maintaining a stable loop operation and performance. The loop dynamics are typically controlled by designing a loop filter with the appropriate low pass filter characteristics to ensure stable operation.

In contrast, an open loop control as implemented by the open loop control circuit 703 do not have such stability restrictions and constraints and can be implemented to be as fast as desired, including essentially instantly determining the open loop control values from the received power setpoints using a deterministic function. Accordingly, the open loop control of the open loop control circuit 703 may be designed to be much faster than the closed loop control of the closed loop control circuit 701,

In many embodiments, the closed loop control circuit 701 and open loop control circuit 703 may be determined such that a time constant of the closed loop control of the closed loop control circuit (701) exceeds that of a time constant for the open loop control of the open loop control circuit (703) by at least a factor of two, five, ten or even more. The time constant for a control function may e.g. be represented by the time it takes for the system to respond to a step change, and may often be measured as the time it takes for a system to reach 1 - 1 / e ≈ 63.2% of its final (asymptotic) value following a step change in the input.

In the approach, the power transmitter power controller circuit 211 accordingly includes two different control approaches with one being an open loop control and the other being a closed loop control which is much slower than the open loop control.

In many embodiments, the time constant of the open loop control of the open loop control circuit 703 may no more than 0.5 msec, 1 msec, 2 msec, 5 msec or 10 msec. Indeed, in some embodiments, the determination of the open loop control values may be substantially instantaneous. In many embodiments, the time constant of the closed loop control of the closed loop control circuit 701 may be no less than 5 msec, 10 msec, 20 msec or 50 msec. The time constant of the open loop control of the open loop control circuit 703 is less than the time constant of the closed loop control of the closed loop control circuit 701.

The combination circuit 705 is coupled to a second circuit, in the following referred to as the parameter controller 707, which is arranged to set the power level parameter dependent on the output control values. The power level parameter may as mentioned be e.g. a frequency, duty cycle, burst mode percentage, amplitude (current and/or voltage) of the drive signal and the parameter controller 707 may be arranged to control the driver 201 to set the corresponding property of the drive signal as required by the control values. For example, the control values from the combination circuit 705 may directly indicate a desired value for the power level parameter, such as directly indicating a frequency, duty cycle, etc., and the parameter controller 707 may directly control the driver to set the corresponding property of the drive signal to the required value.

In some embodiments, the parameter controller 707 may be arranged to perform processing to generate the power level parameter value from the output control values. For example, if the output control values do not directly relate to the controlled parameter, a suitable conversion may be made, e.g. using a predetermined function or algorithm.

The combination circuit 705 of the power transmitter is arranged to perform an adaptable operation and the generation of the open loop control values and closed loop control values may be adapted depending on the operating properties of the power transfer.

The power transmitter accordingly comprises an adapter 709 which is arranged to adapt a relative weight of the open loop control values relative to the closed loop control values in dependence on a power transfer level for a power transfer to the power receiver.

As an extreme example, in some embodiments, the relative weights may be amended such that the output control values are generated from/as the open loop control values for low power levels of the power transfer and from/as the closed loop control values for high power levels of the power transfer. For example, if the power transfer level is below a threshold, the output control values may be generated as the open loop control values (the weight for these being 1 and the weight for the closed loop control values being 0), and if the power transfer level is above the threshold, the output control values may be generated as the closed loop control values (the weight for these being 1 and the weight for the open loop control values being 0). Such an example may correspond to effectively switching between an open loop and a closed loop control in the power transmitter depending on whether the power transfer level is above or below a given threshold.

In many embodiments, such an approach may be supplemented by a transitional region. For example, if the power transfer level is below a first threshold, the output control values may be generated as the open loop control values, if the power transfer level is above a second (higher) threshold, the output control values may be generated as the closed loop control values, and for the power transfer threshold being between the first and second threshold, the output control values may be generated as a weighted combination of the open and closed loop control values with the weight for the open loop control values gradually decreasing for an increasing power transfer level and the weight for the closed loop control values gradually increasing for an increasing power transfer level.

For example, the relative weights for respectively the open and closed loop control values for different power transfer levels may be as follows:

| | | | | |
|---|---|---|---|---|
| - <30W | 0% | closed loop | 100% | open loop |
| - At 35W | 25% | closed loop | 75% | open loop |
| - At 40W | 50% | closed loop | 50% | open loop |
| - At 45W | 75% | closed loop | 25% | open loop |
| - >50W | 100% | closed loop | 0% | open loop |

Thus, in some embodiments, the adapter 709 is arranged to control the power transmitter power controller circuit 211 to ignore the closed loop control values when determining the output control values when the power transfer level does not exceed a given threshold. Alternatively or additionally, the adapter (709) is arranged to control the power transmitter power controller circuit 211 to ignore the open loop control values in determining the output control values when the power transfer level exceeds a given threshold. The two thresholds may be the same or may be different with a range between the thresholds where both the open loop control values and the closed loop control values are included/considered when determining the output control values.

The thresholds may depend on the individual embodiment and the preferences and requirements of the specific application. However, in many scenarios, particularly efficient performance has been found when the thresholds are in the range of 20W-100W.

In many systems, the power receiver is arranged to dynamically adapt the dynamic operation of the power control function in dependence on the power transfer level for the power transfer. The adaption may specifically be such that a faster operation/lower time constant for determining the setpoint values in response to the load power level is employed for a lower power transfer level.

Accordingly, the power receiver 105 in many embodiments include a timing adapter 525 which is arranged to adapt a dynamic property of determining the power setpoint values in dependence on a power transfer level, and specifically to reduce the time constant/increase the speed for determining the setpoint values for a reducing power transfer level.

The timing adapter 525 may specifically receive information from the control function of the power receiver indicating a current power transfer level, or may e.g. determine this from the load power level measurements. It may then apply a monotonically decreasing function to determine a desirable timing property, such as a time constant. The timing adapter 525 may then adapt the power control circuit 515 to apply the desired timing property. The power control circuit 515 may for example include a plurality of different low pass filters (e.g. as part of the load measurement) and the timing adapter 525 may be arranged to select the low pass filter with a time constant most closely matching the desired time constant thereby resulting in an overall desired dynamic performance.

The power receiver may accordingly be arranged to adapt the dynamic performance of the power receiver, thereby also adapting the overall dynamic operation/performance of the (outer) power control loop.

The power transfer level of the power transfer operation may be a power level of the transfer of power from the power transmitter to the power receiver, and specifically may be a power level of the power transfer signal. In many embodiments, the power transfer load may be slowly changing (e.g. may change with a bandwidth of less than 100Hz, 10HZ, or 1 Hz) or indeed in some cases may be constant for at least 1 sec, 10 sec or longer. In some cases, the power transfer level of the power transfer may be a power requested during a negotiation phase, and/or requested by the power receiver for a current mode of operation.

In many embodiments, the power transfer level of the power transfer may be a current power level of the power transfer signal.

In some embodiments, the power transfer level of the power transfer may be a power level requested/indicated by the power setpoint values.

In many embodiments, the adapter 709 may be arranged to determine the power transfer level from the received power setpoint values. For example, in some embodiments, the power setpoint values may directly indicate the desired power level to be transferred to the power receiver, and the adapter 709 may be arranged to low pass filter/average (e.g. over a suitable time window) the received power setpoint values. The low pass filtered/averaged value may then be used as the power transfer level and the power control functionality may be adapted based on this determined value. As another example, each power setpoint value may directly indicate a desired power level for the power transfer signal and the power transfer from the power transmitter to the power receiver, and thus each power setpoint values may be used as a power transfer level (and e.g. be compared to thresholds controlling how the open loop control values and the closed loop control values are combined. In some such cases, no low pass filtering or averaging is applied to the power setpoint values but rather these may be used directly.

The described approaches may provide substantially improved operation, performance, and in particular improved power control, over a large power range. In particular, a system that may provide improved power control for both low power levels and high power levels can be achieved.

For example, for lower power levels, fast and accurate power control can be achieved which may for example allow improved support for power receivers that include large energy storage capacitors in the power path, as it may allow quick and efficient adaptation to the capacitors being charged resulting in a change in the required power transfer level. Such large power smoothing capacitors are common in many low power applications and power receivers but are not often included in power receiver power paths for extracting large power levels.

At the same time, the approach may provide more accurate power control at high power levels by including an inner power control loop and performing slower power regulation. This may be particularly efficient in e.g. preventing over-voltage and over stressing of components at high power levels (which is typically not a critical problem at low power levels).

The approach may allow improved operation and/or facilitated implementation of a power receiver as the need for accurate power measurement may in many cases be reduced to only higher power levels as the open loop operation at low power levels is not dependent on measurements of the power level of the drive signal/power transfer signal. The approach may allow more accurate power measurement of the power level of the drive signal/power transfer signal as this may be limited to a smaller dynamic range, and typically only to higher power levels.

In some embodiments, the frequency of the transmission of power setpoint values from the power receiver to the power transmitter may be fixed, such as e.g. every other communication interval (e.g. resulting in a transmission of a power setpoint value every 10-20 msec or so). The transmission frequency/rate of the power setpoint values may be independent of the dynamic performance/properties of the generation of the power setpoint values from the measured power levels, and of the outer loop in general, as long as the rate is sufficient for the given dynamic performance. Specifically, the transmission rate for power setpoint values may be sufficient for the Nyquist sampling requirement to be met, i.e. specifically the transmission rate may be more than twice the bandwidth of the determination of the power setpoint values/the outer loop.

However, in some embodiments, the timing adapter 525 may also be arranged to adapt a frequency of the transmission of power setpoint values to the power transmitter. The adaptation may be in response to the dynamic property of determining the power setpoint values from the measured power levels and/or on the power transfer level for a power transfer.

Specifically, the transmission rate/frequency may be increased for a reducing power transfer level and/or may be reduced for an increased time constant/reduced bandwidth of the determination of the power setpoint values from the measured power levels. Specifically, the timing adapter 525 may be arranged to set the frequency of the transmissions to be as low as possible while still meeting the Nyquist criterion. In other embodiments, a margin may be included, such as for example a requirement that the frequency of transmission is at least four times the bandwidth of the determination of the power setpoint values.

In many embodiments, the possible changes in frequency are quite limited, i.e. the timing adapter 525 may select between a transmission of a new power setpoint value occurring for every other communication time slot, for every fourth communication time slot, or for every eighth communication time slot. As such, a relatively low complexity adaptation of the transmission frequency may be applied. For example, when selecting between different low pass filters as previously described, the transmission frequency may also be adapted to a predetermined frequency for the selected low pass filter.

In some embodiments, the power transmitter and power receiver may be arranged to communicate in order to adapt the power control operation.

For example, in some embodiments, the power transmitter may be arranged to transmit a capability message to the power receiver where the capability message indicates a property of the power controller 211. For example, the power transmitter may transmit a capability message which may for example simply indicate that the power transmitter has the capability to switch between open loop or closed loop operation, or simply that it has open loop capability. In other embodiments, the capability message may alternatively or additionally indicate a dynamic/timing property of the power control operation, such as a time constant for the closed loop operation. In some embodiments, the capability message may indicate a timing/dynamic property of the open loop operation, such as an indication that the open loop operation is instantaneous or an indication of a time constant for the open loop operation.

The power receiver may be arranged to receive such a capability message from the power transmitter and the timing adapter 525 may be arranged to adapt the generation of the open loop control values in dependence on the capability message.

For example, if the capability message indicates that the power transmitter is not capable of operating in an open loop mode, the timing adapter 525 may control the power receiver power control circuit 515 to operate with a suitable time constant for slow power control operation, e.g. it may set the time constant to, say, 300 msec. However, if the capability message indicates that the power transmitter is capable of operating in an open loop mode, the timing adapter 525 may control the power receiver power control circuit 515 to operate with a suitable time constant for slow power control operation (e.g. 300 msec) for power levels above a threshold (say 50W) and with a much lower time constant for fast power control operation (e.g. 30 msec) for power levels below a threshold (say 30W), and with a time constant in-between (say 100 msec) for values between the thresholds.

In some cases, the capability message may indicate time constants for the closed loop operation and/or the open loop operation, and the timing adapter 525 may adapt the time constant of the determination of the power setpoint values accordingly, such as e.g. setting them to be at least, say, five times higher.

In some embodiments, the power receiver may transmit a message to the power transmitter indicating a dynamic property of the determination of the set point values by the power receiver power control circuit 515. For example, it may indicate one or more properties such as capacitor size, load and overvoltage protection functions, time property for the determination of the power setpoint values etc. This may be used by the power transmitter to adapt and e.g. calibrate the power control operation to the specific power receiver.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A wireless power transmitter (101) for wirelessly providing power to a power receiver (105) via an electromagnetic power transfer signal, the power transmitter comprising:
a power transfer coil (103) arranged to generate the electromagnetic power transfer signal in response to a drive signal being provided to the power transfer coil (103);
a driver (201) arranged to generate the drive signal for the power transfer coil (103) to generate the electromagnetic power transfer signal;
a communication circuit (207) arranged to receive power setpoint values from the power receiver, the power setpoint values being indicative of a target power level for the electromagnetic power level power transfer signal; and
a power controller (211) arranged to control a power level parameter of the drive signal in dependence on the power setpoint values, the power controller (211) comprising:
an open loop control (703) circuit arranged to generate open loop control values from the power setpoint values;
a closed loop control circuit (701) arranged to generate closed loop control values from the power setpoint values;
a first circuit (705) arranged to generate output control values from the open loop control values and the closed loop control values;
a second circuit (707) arranged to set the power level parameter dependent on the output control values; and
an adapter (709) arranged to adapt a relative weight of the open loop control values relative to the closed loop control values when generating the output control values, the adapter (709) being arranged to adapt the relative weight in dependence on a power transfer level for a power transfer to the power receiver.

2. The power transmitter of claim 1 wherein the adapter (709) is arranged to control the power controller (211) to increase a weighting of the open loop control values relative to the closed loop control values for a decreasing power transfer level.

3. The power transmitter of claim 1 or 2 wherein the adapter (709) is arranged to control the power controller (211) to ignore the closed loop control values in determining the output control values when the power transfer level does not exceed a first threshold.

4. The power transmitter of any previous claim wherein the adapter (709) is arranged to control the power controller (211) to ignore the open loop control values in determining the output control values when the power transfer level exceeds a second threshold.

5. The power transmitter of any previous claim wherein the adapter (709) is arranged to control the power controller (211) to determine the output control values in dependence on both the open loop control values and the closed loop control values when the power transfer level is above a lower threshold and below a higher threshold.

6. The power transmitter of any previous claim wherein the adapter (709) is arranged to control the power controller (211) to determine the output control values as a weighted combination of the open loop control values and the closed loop control values.

7. The power transmitter of any previous claim wherein the adapter (709) is arranged to control the power controller (211) to determine the power transfer power level from the power setpoint values.

8. The power transmitter of any previous claim wherein the open loop control circuit (703) is arranged to calculate the open loop control values as a deterministic function of the power setpoint values.

9. The power transmitter of any previous claim wherein a time constant for the closed loop control circuit (701) determining closed loop control values exceeds that of a time constant for the open loop control circuit (703) determining open loop control values by at least a factor of five.

10. The power transmitter of any previous claim wherein the communication circuit (207) is arranged to transmit a capability message to the power receiver, the capability message indicating a property of the power controller (211).

11. The power transmitter of any previous claim wherein the communication circuit (207) is arranged to receive a capability message from the power receiver, the capability message being indicative of a power control property of the power receiver; and the adapter (709) is arranged to adapt the generation of the open loop control values in dependence on the capability message.

12. A power receiver for wirelessly receiving power from a power transmitter via an inductive power transfer signal, the power receiver (105) comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505);
a power control circuit (515) arranged to measure a load power level and to determine power setpoint values in dependence on a comparison of the load power level to a target load power level;
a communicator (509,511) arranged to communicate data with the power transmitter, the communicator (509,511) being arranged to transmit the power setpoint values to the power transmitter; and
an adapter (525) arranged to adapt a dynamic property of determining the power setpoint values in dependence on a power transfer level for a power transfer to the power receiver.

13. The power receiver of claim 12 wherein the adapter (525) is arranged to adapt a frequency of transmission of power setpoint values to the power transmitter.

14. A power transfer system comprising a power transmitter in accordance with any of claims 1 to 11 and a power receiver in accordance with any of claims 12 to 13.

15. A method of operation for a wireless power transmitter (101) wirelessly providing power to a power receiver (105) via an electromagnetic power transfer signal, the power transmitter comprising:
a power transfer coil (103) arranged to generate the electromagnetic power transfer signal in response to a drive signal being provided to the power transfer coil (103); and the method comprising:
generating the drive signal for the power transfer coil (103) to generate the electromagnetic power transfer signal;
receiving power setpoint values from the power receiver, the power setpoint values being indicative of a target power level for the electromagnetic power level power transfer signal; and
controlling a power level parameter of the drive signal in dependence on the power setpoint values, the controlling comprising:
an open loop control (703) circuit generating open loop control values from the power setpoint values;
a closed loop control circuit (701) generating closed loop control values from the power setpoint values;
generating output control values from the open loop control values and the closed loop control values;
setting the power level parameter dependent on the output control values;
adapting a relative weight of the open loop control values relative to the closed loop control values when generating the output control values in dependence on a power transfer level for a power transfer to the power receiver.

16. A method of operation for a power receiver (105) wirelessly receiving power from a power transmitter (101) via an inductive power transfer signal, the power receiver (105) comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505); and the method comprising:
measuring a load power level and
determining power setpoint values in dependence on a comparison of the load power level to a target load power level;
communicating data with the power transmitter (101) including transmitting the power setpoint values to the power transmitter; and
adapting a dynamic property of determining the power setpoint values in dependence on a power transfer level for a power transfer to the power receiver.
